(19)

Europäisches
Patentamt
European
Patent Office
Office européen
des brevets

(11) **EP 2 784 962 A1**

(12) **EUROPEAN PATENT APPLICATION**

(43) Date of publication:
**01.10.2014 Bulletin 2014/40**

(51) Int Cl.:
**H04J 14/06** *(2006.01)* **H04B 10/61** *(2013.01)*

(21) Application number: **13305395.9**

(22) Date of filing: **28.03.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Rival, Olivier
92340 Bourg la Reine (FR)**

• **Morea, Annalisa
91620 Nozay (FR)**
• **Ghazisaeidi, Amirhossein
91620 Nozay (FR)**

(74) Representative: **Mildner, Volker et al
Alcatel-Lucent Deutschland AG
Intellectual Property Business Group
Lorenzstrasse 10
70435 Stuttgart (DE)**

(54) **Method of receiving a phase-modulated polarization division multiplexed optical signal**

(57) Proposed is a method of receiving a phase-modulated polarization division multiplexed (PDM) optical signal. A first digital signal and a second digital signal are derived from the optical signal, representing respective complex values of respective, orthogonal polarization states.

Polarization division demultiplexing is performed, using a set of FIR filters of K filter coefficients. Within a first time interval, the sets of filter coefficients are updated for different discrete time instances, using a first algorithm to achieve PDM demultiplexing with regard to a first phase-modulation method. Within a second time interval, the sets of filter coefficients are kept fixed. Within a third time interval, the sets of filter coefficients are updated for different discrete time instances, using a second algorithm which achieves PDM demultiplexing with regard to a second phase-modulation method different from the first phase-modulation method.

**Fig. 4c**

PDM-QPSK sample

PDM-QPSK sample, PDM-16QAM sample or mix of both

PDM-16QAM sample

**Description**

**Field of the invention**

The invention relates to a method of receiving a phase-modulated polarization division multiplexed optical signal. Furthermore, the invention relates to an optical receiver for an optical network, which is operable to receive a phase-modulated polarization division multiplexed optical signal.

**Background**

For transmitting data bits in an optical data transmission network, it is a prominent approach to transmit data symbols, wherein a data symbol represents a set of data bits. Data symbols are transmitted, by modulating a phase and/or an amplitude of an optical transmission signal having a specific wavelength.

The data symbol usually represents a set of n data bits. Thus, up to $2^n$ different symbols are possible for data transmission. Prominent candidates of modulation methods, in which a phase and/or an amplitude of an optical signal may be modulated, are binary phase shift keying (BPSK), quadrature phase shift keying (QPSK) or for example 16 quadrature amplitude modulation (16QAM). In BPSK and QPSK, only the phase of an optical transmission signal is modulated. In BPSK a data symbol represents one data bit, while in QPSK a data symbol represents two data bits. In 16QAM the phase as well as the amplitude of the optical transmission signal are modulated, wherein a data symbol represents four data bits.

Data symbols are transmitted at a symbol rate, which may also be called a baud rate. Depending on the number of data bits that are represented by a single data symbol, the chosen symbol rate corresponds to a specific resulting data rate.

Increasing the data rate in optical data transmission may be achieved, by applying the technology of polarization division multiplexing (PDM). In PDM, a first optical symbol of a specific wavelength having a first polarization state is modulated in dependence on transmission data and in accordance with the chosen transmission method. Furthermore, a second optical transmission signal of the same specific wavelength but of a second polarization state, which is orthogonal to the first polarization state, is modulated in dependence on transmission data and the chosen modulation method. Thus, by applying the principle of PDM, the respective data rate may for example be increased by a factor of two. When trying to derive transmitted data symbols as well as transmitted data from an optical PDM signal at a receiving side, the first optical signal of the first polarization state and the second optical signal of the second polarization state have to be derived from the received optical PDM signal. A problem may be given, in that the polarization states of the respective optical signals do not remain constant along an optical transmission channel, but these polarization states rotate as the transmission distance of the optical channel increases. Thus, the exact orientation of the respective polarization states of the first and the second optical signal as inherent signal components of the received optical PDM signal may not be known at the receiving side.

For deriving data symbols from an optical PDM signal at the receiving side, the following steps may be carried out. At first, the optical PDM signal having a specific wavelength is down converted in a down converting step, using an optical carrier signal that has a specific wavelength of the optical PDM signal. Preferably, the down converted optical signal is not only one down converted optical signal, but a set of down converted optical signals. In a next step, the one or more down converted optical PDM signals are used to derive an electrical in-phase signal component and an electrical quadrature signal component representing in conjunction complex values of the down converted optical signal along a first polarization axis. Furthermore, the one or more down converted optical PDM signals are used to derive an electrical in-phase signal component and an electrical quadrature signal component representing in conjunction complex values of the down converted optical signal along a second polarization axis, which is orthogonal to the first polarization axis. The electrical signal components are then sampled and the obtained sampled and digitized digital signals are then used to derive a first digital signal, representing complex values of the down converted optical signal along the first polarization axis, as well as a second digital signal, representing complex values of the down converted optical signal along the second polarization axis.

These obtained two digital signals may then be filtered for the purpose of polarization demultiplexing, using a set of finite impulse response (FIR) filters. The filters form a butterfly filter structure. The filter coefficients of these filters may be determined, such that the set of filters perform polarization division demultiplexing. This step of polarization demultiplexing then provides two new filter signals, which in the ideal case represent the initially transmitted optical signals of the first polarization state and the second polarization state.

Due to the fact, that different modulation methods with different respective constellation schemes bear different sensitivities to physical impairments experienced by the optical signals along the transmission links, it may be necessary to switch from a data transmission using one modulation method to a data transmission using another modulation method. This may be the case, that for example physical impairments of the optical signals change over time. Such a change may be given due to aging of fibers or other effects.

Thus, there is a need to provide a method of data transmission, in which a receiving side is able to switch from one transmission method of phase modulation to another transmission method of phase modulation.

## Summary

Proposed is a method of receiving a phase-modulated polarization division multiplexed optical signal.

The method comprises different steps.

A first digital signal and a second digital signal are derived from the optical signal. The first digital signal represents complex values of the optical signal along a first polarization axis. The second digital signal represents complex values of the optical signal along a second, orthogonal polarization axis.

Polarisation division demultiplexing is performed, by deriving from the first and the second digital signal a third and a fourth digital signal. This derivation is carried out, using a set of finite impulse response (FIR) filters. The FIR filters use respective sets of K filter coefficients.

The step of deriving the third digital signal and the fourth digital signal includes

- within a first time interval, updating the sets of filter coefficients for different discrete time instances, using a first algorithm which is designed to achieve PDM demultiplexing with regard to a first phase-modulation method,

- within a second time interval, keeping the sets of filter coefficients fixed, wherein the second time interval is of a time length corresponding to at least K consecutive discrete time instances,

- within a third time interval, updating the sets of filter coefficients for different discrete time instances, using a second algorithm which is designed to achieve PDM demultiplexing with regard to a second phase-modulation method different from the first modulation method.

In other words, the first algorithm determines the filter coefficients, such that the filtering caused by the FIR filters achieves PDM demultiplexing with regard to the first phase-modulation method, while the second algorithm determines the filter coefficients, such that, such that the filtering caused by the FIR filters achieves PDM demultiplexing with regard to the second phase-modulation method different from the first modulation method.

## Brief description of the Figures

Figure 1 shows a proposed optical receiver for an optical network according to a preferred embodiment.

Figure 2 shows a set of FIR filters.

Figure 3 shows a possible implementation of an FIR filter.

Figures 4a to 4d show different steps of the proposed method according to a preferred embodiment.

Figure 5 shows an optical mixer according to a preferred embodiment.

## Description of embodiments

As it has been outlined in the background section previously above, polarization division multiplexed optical signals having orthogonal polarization states at a transmitting side may be received at a receiving side with respective polarization states, which are not aligned anymore with their initial polarization states at the transmitting side. Preferably, the respective polarization states are still essentially orthogonal to each other.

Thus, filter algorithms may be used at a receiving side for counteracting such a rotation of the polarization states of the optical PDM signals.

Each of the optical PDM signals is modulated at least in its phase for the purpose of data transmission. Using for example the modulation method of QPSK, wherein each data symbol represents two bits, the corresponding constellation scheme is less sensitive to physical impairments experienced by the optical PDM signals in comparison to the modulation method of 16QAM, in which each data symbol represents four bits. This is due to the fact, that the different constellation points of the constellation scheme of 16QAM are located more narrowly to each other than the constellation points of the constellation scheme of QPSK. To give a rough example, 16QAM requires approximately an optical signal-to-noise ratio that is 7dB higher than that of QPSK for achieving a same bit error rate (BER). On the other hand, 16QAM is able to provide a data transmission with a data rate that is twice the data rate of QPSK. Thus, data transmission may be adapted, such that a modulation method is used, which allows a maximized symbol rate or a maximized data rate while at the same time achieving a required maximum bit error rate.

While at one point of time, a specific chosen modulation method may be suitable with regard to physical impairments caused by the optical transmission channel at that point of time, there may be a need to change to another modulation method due to the fact, that the physical impairments increase over time, e. g. because of aging of the fibers or other components of the optical links or because of the setup of additional connections in the network therefore increasing the amount of inter-channel-crosstalk (linear or non-linear).

On the contrary, in the case that a number of connections in the network have been removed leading to less impairment between the different signals, it may be possible to switch to a modulation method of an increased data rate, which has a constellation scheme that is more sensitive to physical impairments but still robust enough to transmit data at a required maximum bit error rate under the influence of the new physical impairments. Thus, there may be a need to switch between modulation formats at a receiving side in order to be able to exploit a variation over time of the optical channel's properties.

One solution proposed by the prior art for switching between different modulation methods uses also a switching of the data transmission from a working path to a protection path. First, the traffic is switched from the working path to the protection path and received via the protection path at the receiving side. The receiving device of the working path at the receiving side is then reconfigured to a new modulation format and dummy data is received under the new, second modulation format via the working path, while the data actually derived at the receiving side is still received under the first modulation method via the protection path. After a certain amount of time, the signal processing algorithms handling the dummy data received via the working path have converged. Upon such convergence, the actual data transmission is switched back from the protection path to the working path, where the actual transmission data is transmitted using the second modulation format. Such a solution is only applicable, when having a protection path in addition to the working path at hand, which may be a costly solution.

A second solution proposed by the prior art includes switching between the different modulation formats during maintenance. Upon the need for the change of the modulation methods, a control signal is sent to client layers, e. g. IP routers or OTN switch, indicating that the connection will become unavailable for a specific time duration. During this time duration, the modulation performs switching from a first modulation method to a second modulation method. The client layer then updates its routing table and stops sending traffic via the previously used optical data connection. The format switch can then be performed and a convergence of the signal processing algorithms may be achieved using dummy data. After this convergence is achieved, a control signal is sent to the client layers indicating that the optical data connection is now available again. Data transmission may then be carried out using the second modulation method. The main problem of this solution is that the optical data connection cannot be used during the time duration needed for the maintenance.

One or more of the above-mentioned disadvantages may be overcome by the solution of optical data reception proposed herein.

These advantages will now be described in detail with regard to the different embodiments described below.

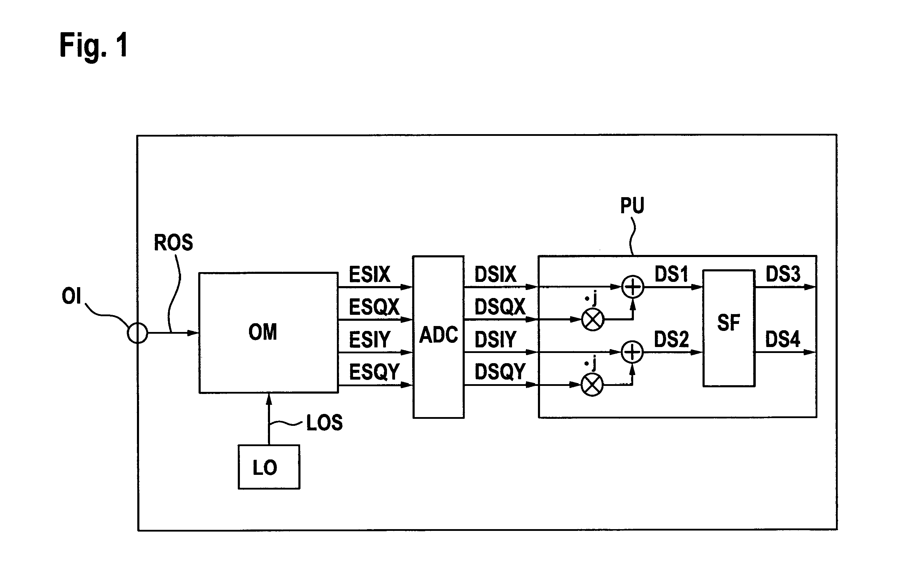

Figure 1 shows a proposed optical receiver OR according to a preferred embodiment. The receiver OR contains an optical interface OI, at which a phase modulated polarization division multiplexed (PDM) optical signal ROS is received. The received signal ROS is then provided to an optical mixer OM together with an optical local oscillator signal LOS provided by a local oscillator LO. The optical mixer OM performs a down conversion of the received signal ROS, using the local oscillator signal LOS. The optical mixer OM derives an electrical in-phase signal component ESIX and an electrical quadrature signal component ESQX, which in conjunction represent complex values of the down converted optical signal along a first polarization axis. Furthermore, the optical mixer OM derives an electrical in-phase signal component ESIY and an electrical quadrature signal component ESQY, which in conjunction represent complex values of the down converted optical signal along a second polarization axis, that is orthogonal to the first polarization axis.

One or more analogue digital converters ADC are then used, to sample the electrical signals ESIX, ESQX, ESIY, ESQY for obtaining respective digital time discrete signals DSIX, DSQX, DSIY, DSQY. The time discrete digital signals DSIX, DSQX, DSIY, DSQY are then provided to a processing unit PU.

At least one analogue digital converter ADC samples the electrical signals ESIX, ESQX, ESIY, ESQY at a sampling rate fs. The sampling rate fs corresponds to a sampling period Ts. Thus, the signal DS1 and the signal DS2 are derived for successive discrete time instances at the sampling rate fs. Consecutive ones of the time discrete instances of the signals DS1 and DS2 are separated by the sampling period Ts.

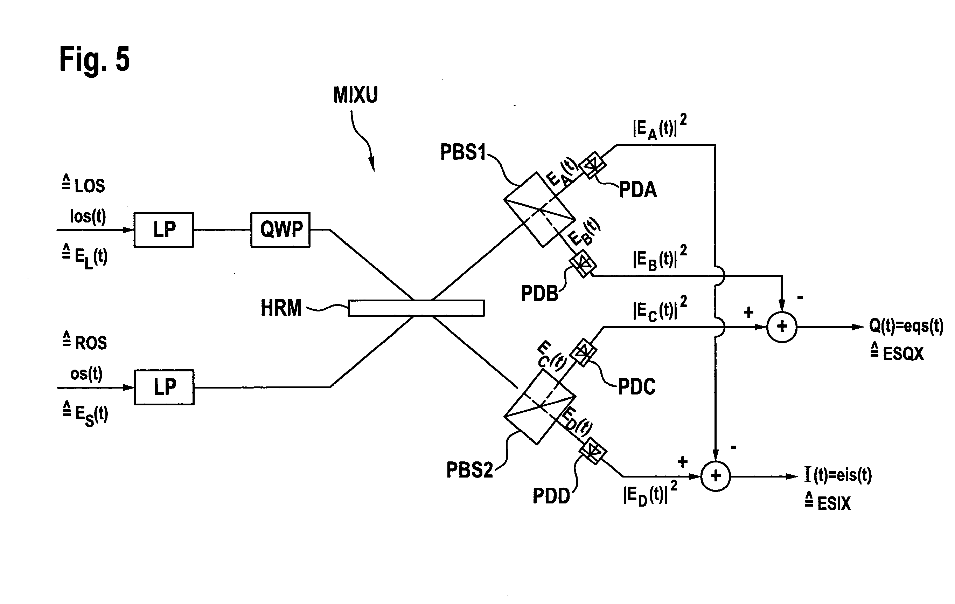

The optical mixer OM is now described with regard to Figure 5. Figure 5 shows an optical mixing unit MIXU, which is able to perform downconversion of the received optical signal ROS for one polarization state, leading to an electrical inphase signal component ESIX and an electrical quadrature signal component for that polarization state.

Taking into consideration the detailed explanations given with regard to the optical mixing unit MIXU, a person in the art is able to foresee a device that is also able to perform downconversion of the received optical signal ROS for another, orthogonal polarization state, leading to an electrical inphase signal component ESIX and an electrical quadrature signal component for that other polarization state.

Figure 5 shows the received optical signal ROS, also denoted as os(t), which has an electrical field ES(t), that can be described by an amplitude $A_s(t)$, a frequency $\omega_s$ and a phase $\varphi_s$ as

$$E_s(t) = A_s(t) \cdot e^{j(\omega_s - \varphi_s)} \quad .$$

The local optic signal LOS, also denoted as los(t), has an electrical field EL(t), that can be described by amplitude $A_l(t)$, a frequency $\omega_l$ and a phase $\varphi_l$ as

$$E_L(t) = A_L(t) \cdot e^{j(\omega_L - \varphi_L)}$$

The optical signal os(t) is provided to a linear polarizer LP. The linear polarizer LP polarizes the optical signal os(t), such that the resulting optical signal has an electrical field that is rotated by an angle of 45° to the principle axis of the two polarization beam splitters PBS1, PBS2 of the mixing unit MIXU. The local optical signal los(t) is provided to a linear polarizer LP, which aligns the optical signal and the electrical field, such that it is aligned in line with the fast axis of the following quarter-wave plate QWP.

The quarter-wave plate QWP causes a circular polarization of the incoming optical signal which yields with respect to the principal axis of the polarization beam splitters PBS1, PBS2 respective components, that are shifted by a phase of $\pi/2$. That optical component leaving the quarter-wave plate QWP, that is aligned with the passed through axis of the polarization beam splitters PBS1, PBS2, is shifted by $\pi/2$, while the other component does not experience a phase shift.

The linearly polarized optical signal os(t) coming from the linearly polarized LP is distributed by half-reflective mirror HRM to the polarization beam splitters PBS1, PBS2. Furthermore, the two signal components of the circularly polarized optical signal leaving the quarter-wave plate QWP are also distributed by this half-reflecting mirror HRM to the polarization beam splitters PBS1, PBS2.

Optical signals arriving at the polarization beam splitter PBS1 are split, such that optical signals lying within a polarization plane aligned with the pass-through axis of the polarization beam splitter PBS1 are transferred to a photodiode PDA. Optical signals coming in to the polarization beam splitter PBS1 in a polarization plane aligned with the reflecting axis of the polarization beam splitter PBS1 are reflected to a photodiode PDB. The electrical field of the optical signal reaching the photodiode PDA can be described as the electrical field EA(t). The electrical field of the optical signals reaching the photodiode PDB can be described as the electrical field EB(t).

The optical signals coming in to the polarization beam splitter PBS2 in alignment with the polarization plane corresponding to the pass-through axis of the polarization beam splitter PBS2 are passed on to a photodiode PDD. Optical signals coming in to the polarization beam splitter PBS2 in a polarization plane aligned with the reflecting axis of the polarization beam splitter PBS2 are reflected to a photodiode PDC.

The electrical field of the optical signal reaching the photodiode PDC can be considered as the electrical field EC(t). The electrical field of the optical signal reaching the photodiode PDD can be considered as the electrical field ED(t).

The electrical fields reaching the photodiodes PDA, PDB, PDC, PDD can be described as it will be now shown in detail below.

The electrical field ES(t) does not experience any phase shift by the half-reflective mirror HRM known by the polarization beam splitter PBS1. Therefore, the electrical field ES(t) is not subject to a phase shift. The electrical field EL(t) is subject to a phase shift by $\pi/2$ due to the reflection by the half-reflective mirror HRM, as well as a phase shift by $\pi/2$ caused by the quarter-wave plate QWP. Therefore the electrical field EL(t) experiences an overall phase shift by $\pi$ before reaching the photodiode PDA. Therefore, the electrical field EA(t) can be described as

$$E_A(t) = E_S(t) + E_L(t) \cdot e^{j\pi}$$

The electrical field ES(t) experiences a phase shift by $\pi/2$ before reaching the photodiode PDB, due to the reflection within the polarization beam splitter PBS1. The electrical field EL(t) experiences a first phase shift by $\pi/2$ at the half-reflecting mirror and a second phase shift by $\pi/2$ during the reflection within the polarization beam splitter PBS1, before reaching the photodiode PDB. Therefore, the electrical field EB(t) can be written as

$$E_B(t) = E_S(t)e^{j\pi/2} + E_L(t) \cdot e^{j\pi} \quad .$$

The electrical field ES(t) experiences a phase shift by $\pi/2$ due to the reflection at the half-reflective mirror HRM as well as a phase shift by $\pi/2$ during the reflection within the polarization beam splitter PBS2, before reaching photodiode PDC. The electrical field EL(t) experiences a phase shift by $\pi/2$ within the polarization beam splitter PBS2 during the reflection before reaching the photodiode PDC. Therefore, the electrical field EC(t) can be written as

$$E_C(t) = E_S(t)e^{j\pi} + E_L(t) \cdot e^{j\pi/2} \quad .$$

The electrical field ES(t) experiences a phase shift by $\pi/2$ at the half-reflective mirror HRM, before reaching the photodiode PDD. Furthermore, the electrical field EL(t) experiences a phase shift by $\pi/2$ within the quarter-wave plate QWP, before reaching the photodiode PDD.
Therefore, the electrical field ED(t) can be written as

$$E_D(t) = E_S(t)e^{j\pi/2} + E_L(t) \cdot e^{j\pi/2} \quad .$$

The photodiodes PDA, PDB, PDC, PDD generate electrical signals at their outputs, which correspond to the intensities of the electrical fields reaching the photodiodes PDA, PDB, PDC, PDD, therefore each photodiode, PDA, PDB, PDC, PDD, generates electrical signals $|E_A(t)|^2$, $|E_B(t)|^2$, $|E_C(t)|^2$, $|E_D(t)|^2$ which are equivalent to the squared magnitudes of the electrical signals reaching the photodiodes PDA, PDB, PDC, PDD.
The electrical signal $|E_B(t)|^2$ provided by the photodiode PDB is subtracted from the electrical signal $|E_C(t)|^2$ provided by the photodiode PDC. This yields a signal Q(t), which can be shown to be and be described as

$$Q(t) = \left|E_C(t)\right|^2 - \left|E_B(t)\right|^2 = \frac{1}{2}A_S(t) \cdot A_L \cdot \sin(\varphi_1(t)) \, .$$

Furthermore, the electrical signal $|E_A(t)|^2$ provided by the photodiode PDA is subtracted from the electrical signal $|E_D(t)|^2$ provided by the photodiode PDD, which yields an electrical signal I(t), which can be derived as

$$I(t) = \left|E_D(t)\right|^2 - \left|E_A(t)\right|^2 = \frac{1}{2}A_S(t) \cdot A_L \cdot \cos(\varphi_1(t)) \, .$$

Within the electrical signals I(t), Q(t), the phase $\varphi_1(t)$ can be shown to be

$$\varphi_1(t) = (\omega_S - \omega_L) \cdot t + \varphi_S(t) - \varphi_L(t).$$

In the case, that the frequency $\omega_L$ of the local optical signal los(t) is essentially equal to the frequency $\omega_S$ of the optical signal os(t), the phase $\varphi_1(t)$ of the signals I(t), Q(t) is reduced to the difference between the phase $\varphi_S(t)$ of the optical signal os(t) and the phase $\varphi_L(t)$ of the local optical signal los(t) as

$$\varphi_1(t) \approx \varphi_S(t) - \varphi_L(t).$$

Therefore, the signal I(t) can be considered as an electrical in-phase signal component ESIX, also denoted as $I(t) = eis(t)$, of the optical based-band signal obtained by mixing the optical signal os(t) with the local optical signal los(t). Furthermore, for the same reason explained above, the signal Q(t) can be considered as an electrical quadrature signal component ESQX, also denotd as $Q(t) = eqs(t)$, of an optical based-band obtained by mixing the optical signal os(t) with the local optical signal los(t).

Coming back to Figure 1, the processing unit PU multiplies the digital quadrature component DSQX with the complex value j and superposes it with the digital in-phase signal component DSIX for obtaining the digital signal DS1. The signal DS1 represents complex signal values of the down converted optical signal along a first polarization axis.

The processing unit PU furthermore multiplies the quadrature signal component DSQY with the complex value j, before superposing it with the in-phase signal component DSIY for obtaining the digital signal DS2. The digital signal DS2 represents complex signal values of the down converted optical signal along a second polarization axis that is orthogonal to the first one.

The digital signals DS1 and DS2 may then be subject to chromatic dispersion compensation, which is generally performed in the frequency domain through the application of a format independent phase filter and is therefore agnostic to format change of the modulation format. Furthermore, clock recovery may be performed by a format independent technique called the spectrum redundancy method. These steps of chromatic dispersion compensation or clock recovery are not shown explicitly in Figure 1. The signals DS1 and DS2 are denoted herein as such, even if a chromatic dispersion compensation, a clock recovery or other processing techniques have been applied to them.

The processing unit PU performs polarization demultiplexing, by deriving from the signals DS1 and DS2 a third digital signal DS3 and a fourth digital signal DS4. For this, the processing unit PU uses a set of filters SF, wherein the filters are FIR filters. These filters are of a length K each, such that each filter has K filter coefficients. The filter coefficients of one of the filters may be considered a set of filter coefficients.

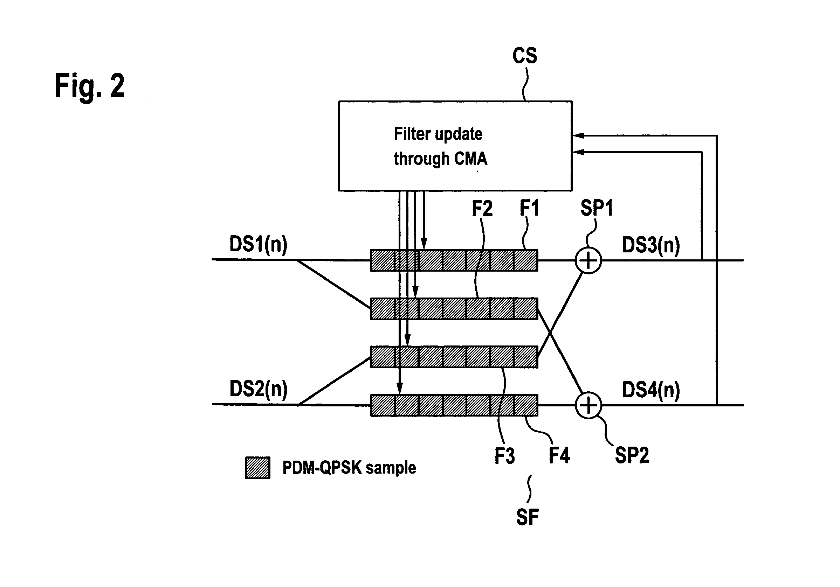

Figure 2 shows the set of filters SF, which derive from the signals DS1 and DS2 the signals DS3 and DS4, using filters F1, F2, F3, F4. The filters F1, F2, F3, F4 form a butterfly filter structure.

The filtering result of the filter F1 filtering the signal DS1 is superposed with the filtering of filter F3 filtering the signal DS2 for obtaining the signal DS3. The filtering result of the filter F2 filtering the signal DS1 is superposed with the filtering result of the filter F4 filtering the signal DS2 for obtaining the signal DS4.

The filters F1, ..., F4 have respective impulse responses

$$h_1 = h_1(0) \ldots h_1(K-1)$$

$$h_2 = h_2(0) \ldots h_2(K-1)$$

$$h_3 = h_3(0) \ldots h_3(K-1)$$

$$h_4 = h_4(0) \ldots h_4(K-1)$$

Each of the filters F1, ..., F4 have K filter coefficients. The signal DS3 is then obtained as

$$DS3(n) = DS1(n) * h_1(n) + DS2(n) * h_3(n)$$

$$DS3(n) = \sum_{k=0}^{K-1} DS1(n-k) \cdot h_1(-k) + \sum_{k=0}^{K-1} DS2(n-k) \cdot h_3(-k)$$

The signal DS4 is then obtained as

$$DS4(n) = DS1(n) * h_2(n) + DS2(n) * h_4(n)$$

$$DS4(n) = \sum_{k=0}^{K-1} DS1(n-k) \cdot h_2(-k) + \sum_{k=0}^{K-1} DS2(n-k) \cdot h_4(-k)$$

Herein, n is the time discrete index of the signals DS1, DS2, DS3, DS4.

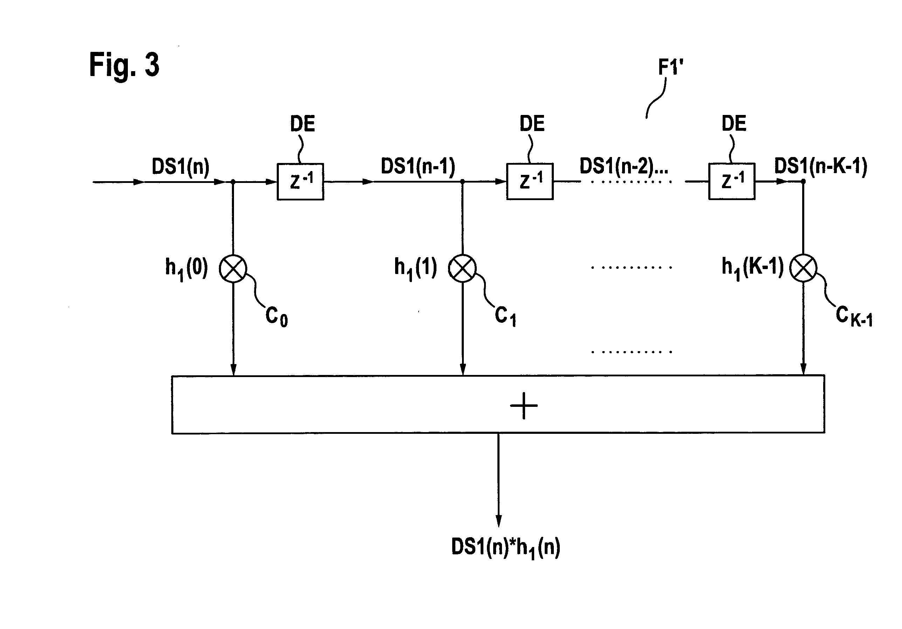

Figure 3 shows a possible implementation F1' of the filter F1 shown in Figure 2 in more detail as a general illustration of the different filters F1, ..., F4 shown in Figure 2. The FIR filter F1' is provided with the time discrete values of the signal DS1, wherein these time discrete values are provided to a chain of delay elements DE. This chain of delay elements DE shifts the time discrete values of the signal DS1 at the sampling rate of the signal DS1. At each time instance, the different time discrete values of the signal DS1 are multiplied by respective coefficients $C_O, \ldots, C_{K-1}$. The resulting values are then superposed in an addition element AE for obtaining the result equation 4. Respective implementations of the filters F2, F3, F4 shown in Figure 2, may be achieved in an analogue manner.

Coming back to Figure 2, a computation step CS uses the signals DS3 and DS4 for deriving updated filter coefficients for the filters F1, ..., F4. In the case, that the modulation format used for data transmission is QPSK, an algorithm called Constant Modulus Algorithm (CMA) may be chosen for deriving updated filter coefficients within the step of computation CS. The Constant Modulus Algorithm exploits the fact, that after a proper step of polarization demultiplexing, the complex values of the signals DS3 and DS4 should represent QPSK symbols that have a same amplitude and should lie on a reference unit circle. Thus, the CMA algorithm aims to provide filter coefficients minimizing the distance of the values of the signals DS3 and DS4 to the reference unit circle.

In the case, that a format of 16QAM is used for data transmission, this format lacks the property of data symbols lying on the reference unit circle with the same amplitude. Thus, in the case that a method carrying out phase and amplitude modulation, such as 16QAM, is used for data transmission, the computation step CS may use a Multi Modulus Algorithm or a Decision Directed algorithm.

In the Multi Modulus Algorithm, a preliminary intensity detection is first performed for determining, to which of the different possible intensity rings the currently received symbols belong. In the case, that 16QAM is used, the constellation points can be partitioned in sets belonging to three different concentric rings of the constellation scheme. Next following, a Constant Modulus Algorithm may be carried out, in which a pre-defined ring radius may be used. In a Decision Directed Approach algorithm, the error function used inside the adaptation iterations is modified, such that the caused function is Euclidian minimum distance between the received symbol and the ideal desired constellation.

The Decision Directed Approach can handle arbitrary constellations at the expense of less tolerance to frequency and carrier phase offset.

A detailed description of the mentioned algorithms is given in the document " 'Digital Coherent Optical Receivers: Algorithms and Subsystems', Seb J. Savory, IEEE Journal of Selected Topics in Quantum Electronics, Vol. 16, No. 5, September/October 2010", which is incorporated by reference herein. A person skilled in the art will find all necessary information in this document, for implementing the mentioned algorithms.

Considering the above explanations, it becomes evident, that when receiving an optical signal having a first modulation format within a first time interval and updating the filter coefficients within this first time interval by the computation step CS carrying out one specific of the above-mentioned algorithms, the algorithm used within this first time interval is specifically designed for this first modulation method. In the case, that the modulation method used for data transmission should be changed, such that a another, second modulation method is used for data transmission of further data symbols, there is a need to control the filter coefficients of F1, ..., F4 properly. In the case, that for example it is switched from a first modulation of QPSK to a second modulation format of 16QAM, the Constant Modulus Algorithm that is suitable for the first modulation method of QPSK will not be able to provide proper updated filter coefficients for the second modulation method of 16QAM. One approach could be, to totally stop data transmission for a certain amount of time, switch to another algorithm at the transmitting and the receiving side, train the algorithm on the receiving side until convergence is reached using transmitted dummy data and pick up real data transmission again after the new algorithm suitable for the new modulation method at the receiving side has converged. But this would bear the disadvantage, that actual data transmission is discontinued for a specific amount of time.

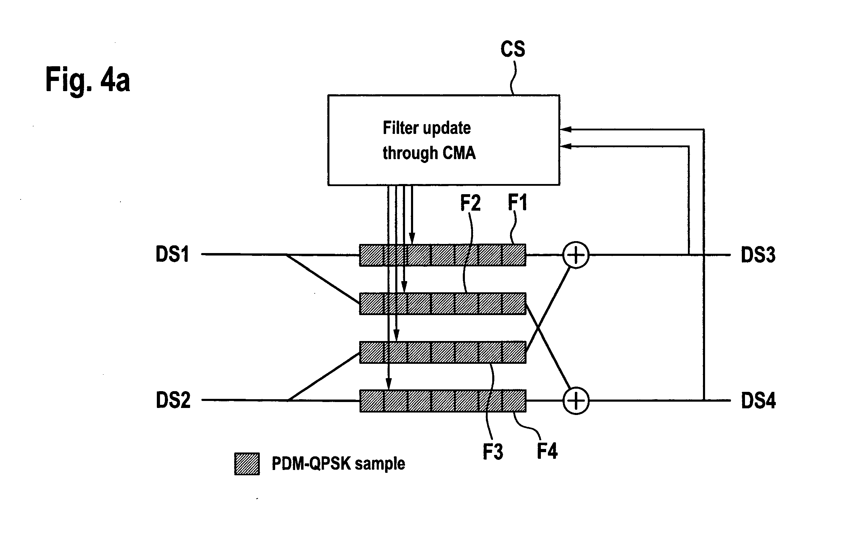

The proposed method is now explained in detail with regard to Figures 4a to 4d.

The Figures 4a to 4d show the previously mentioned set of filter coefficients SF. In the example shown in the Figures 4a to 4d, the filters F1, ..., F4 contain k=7 filter coefficients. This number of k=7 is only chosen as an example.

Figure 4a shows the step of deriving the third signal DS3 and the fourth signal DS4 within a first time interval. Within this first time interval, the sets of filter coefficients are updated for different discrete time instances. This is carried out, using an algorithm, that is designed to achieve polarization division demultiplexing with regard to the first modulation method used for data transmission within the first time interval.

Preferably, the filter coefficients are updated not for every consecutive discrete time instance within the first time interval, but in an alternating manner, such that the filter coefficients are updated after L>1 samples of the signals DS1, DS2, DS3, DS4.

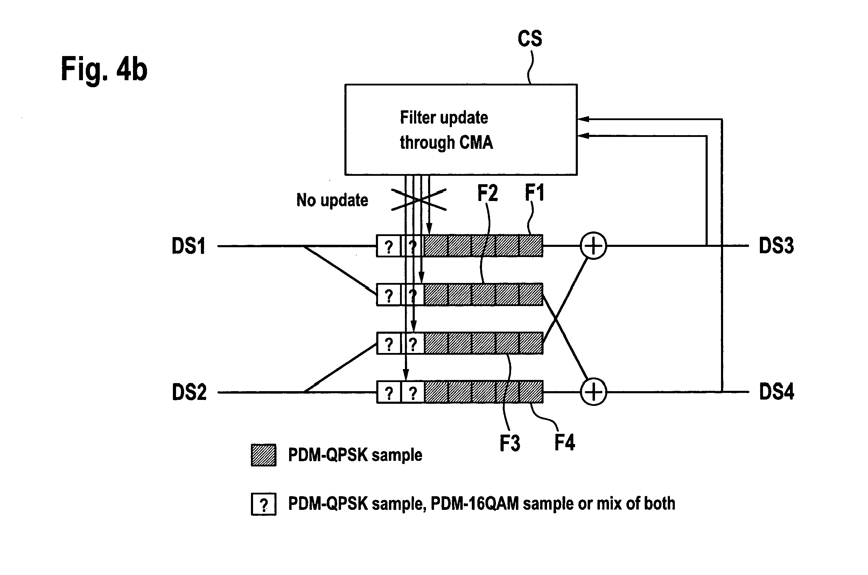

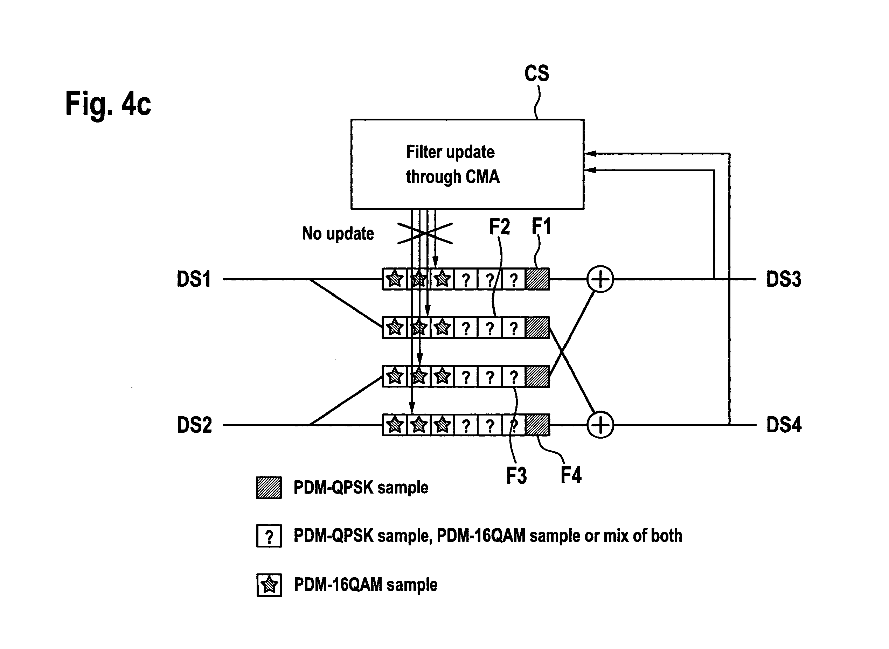

Figure 4b and 4c show the operation of the proposed optical receiver within a second time interval. The second time interval is consecutive to the first time interval. Upon a pre-determined time instance, the second time interval starts, within which the filter coefficients of the filters F1, ..., F4 are kept fixed. The pre-determined time instance is preferably that, at

which the modulation format of the received optical signal changes. Figure 4b shows the filter coefficients and the filters F1, ..., F4 at two sampling instances after this pre-determined time instance. This is indicated, in that the first two samples present within the filters F1, ..., F4 are indicated as question marks. These shall be discrete values of the signals DS1 and DS2 that may be affected by symbols the new modulation format. Preferably, the filter coefficients are fixed to those filter coefficients, which were the last ones used within the first time interval. The sampling values of the signals DS1 and DS2 present within the first two chain elements of the filters F1, ..., F4 may be affected by a mix of samples caused by the first modulation method, for example QPSK, as well as samples generated by the second modulation method, for example 16QAM. The samples of the different modulation methods may overlap due to accumulated polarization multiplexing caused along the transmission line.

Figure 4c illustrates samples of the signals DS1 and D2 being present within the filters F1, ..., F4 after four further discrete time instances. The sampling values representing a mix of the signals generated by the different modulation methods are now succeeded by further sampling values caused by the second modulation method. These further sampling values caused by the second modulation method are indicated as little star symbols.

In this example, the first three values present within the filters F1, ..., F4 represent samples of the signals DS1 and DS2 caused by the second modulation method. Due to the fact, that the filters F1, ..., F4 have not been filled up yet totally with sampling values which correspond to data signal values caused by the second modulation method, the filter coefficients of the filters F1, ..., F4 are still kept fixed within the second time interval, as indicated in Figure 4c.

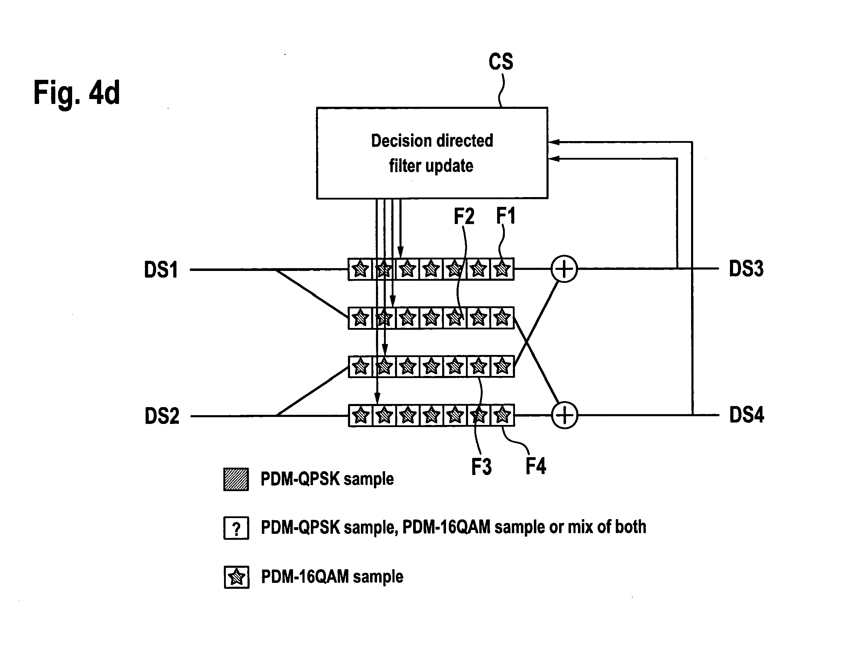

Figure 4d shows an operation of the Filters F1, ..., F4 within a third time interval. The third time interval is consecutive second time interval. Due to the fact, that it is expected that the filters F1, ..., F4 are now filled up only by sampling values, which are caused by the second modulation method, the filters F1, ..., F4 are operated in the following manner. The sets of filter coefficients for the filters F1, ..., F4 are updated for different discrete time instances, using the second algorithm that is designed to achieve polarization division demultiplexing with regard to the second phase modulation method. In this example, due to the fact that the second phase modulation method is 16QAM, the computation step CS uses the Decision Directed Approach algorithm for updating the filter coefficients for the filters F1, ..., F4.

The second time interval, during which the filter coefficients of the filters are kept fixed, as shown in the Figure 4b and 4c, is at least of a time length that corresponds to at least K consecutive discrete time instances, wherein K is equal to the number of filter coefficients. This minimum number of K discrete time instances is sufficient in the case, that no mixing of the different sampling values for the different modulation methods would occur. In such case, after K consecutive discrete time instances, the filters F1, ..., F4 would be filled up totally with new sampling values caused by the second modulation method. Thus, under this assumption, it would be sufficient that the second time interval lasts K consecutive discrete time instances.

Assuming furthermore, that polarization mode dispersion may cause a certain number of samples to be a mixture of samples from the first modulation method and samples from the second modulation method, such a mixture may be taken into consideration, by increasing the time length of the second time interval furthermore. It may be assumed that such a mixture may occur for further K discrete time instances, such that the second time interval is chosen to a time length, which is at least at the time length corresponding to 2K consecutive discrete time instances.

Even furthermore, an uncertainty for choosing that time instance, at which the second time interval begins, may be taken into consideration as a timing uncertainty. Thus, the second time interval may be increased by a further number of m consecutive discrete time instances, wherein m is a pre-defined number. This pre-defined number M may be provided to the optical receiver within a transmission frame or control channel. Thus, the second time interval is preferably chosen to a timing corresponding to at least 2K+M consecutive discrete time instances.

The method proposed herein bears the advantage, that the actual data transmission is not interrupted, due to the fact that filter coefficients used for polarization demultiplexing within the first time interval are also used throughout the second time interval, during which further samples of the signals DS1 and DS2 are received and may lead to received data at further processing steps not explicitly shown in the Figures. Thus, data transmission does not have to be interrupted explicitly. This is possible, due to the fact that the impairments caused by the optical transmission channel vary not at a high rate, but typically over rather long time periods, expressed in multiples of the sampling period. There are therefore generally no significant variations of the channel conditions to be expected for the second time interval, during which the new samples corresponding to the second modulation format are filtered. Thus, the proposed method as well as the proposed device achieve data reception under a change of the modulation method without having to interrupt the data transmission. Minor data errors caused by operating the filters using non-updated filter coefficients during the second time interval may be compensated later on at a stage of forward error correction decoding.

For deciding, at which time instance the second time interval shall start, data information indicating the discrete time instance, at which the second time interval shall start, may be received at the optical receiver. Using this data information, the second time interval is started.

This data information may be received via a transport frame or via control information received along a control channel. For this purpose, the receiver OR shown in Figure 1 may comprise further devices not explicitly shown in Figure 1. The receiver OR may contain a control channel interface for receiving control information from a network management or a control plane. Alternatively, the receiver OR may contain a data decoding unit, which is able to derive data of transport frames from the signals DS3 and DS4.

In the third embodiment, the data information indicates a value for a countdown counter. The countdown counter is set to the value indicated upon reception of this value. The countdown counter is operated at a sampling rate. Upon the countdown counter reaching the value 0, the second time interval is started.

The functions of the various elements shown in the Figure 1, including any functional blocks labeled as 'processing unit' or 'processor', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method of receiving a phase-modulated polarization division multiplexed (PDM) optical signal, comprising

- deriving a first digital signal (DS1) and a second digital signal (DS2) from said optical signal (ROS), wherein said first digital signal (DS1) represents complex signal values of said optical signal (ROS) along a first polarization axis, and wherein said second digital signal (DS2) represents complex signal values of said optical signal along a second, orthogonal polarization axis,
- performing polarization division demultiplexing, by deriving from said first and said second digital signal (DS1, DS2) a third digital signal (DS3) and a fourth digital signal (DS4), using a set of finite impulse response (FIR) filters (F1, ..., F4), wherein said FIR filters (F1, ..., F4) use respective sets of K filter coefficients,
- wherein the step of deriving said third digital signal (DS3) and said fourth digital signal (DS4) includes,

    - within a first time interval, updating said sets of filter coefficients for different discrete time instances, using a first algorithm which is designed to achieve PDM demultiplexing with regard to a first phase-modulation method,
    - within a second time interval, keeping said sets of filter coefficients fixed, wherein said second time interval is of a time length corresponding to at least K consecutive discrete time instances,
    - within a third time interval, updating said sets of filter coefficients for different discrete time instances, using a second algorithm which is designed to achieve PDM demultiplexing with regard to a second phase-modulation method different from said first phase-modulation method.

2. Method according to claim 1,
wherein said second time interval is consecutive to said first time interval and wherein said third time interval is consecutive to said second time interval.

3. Method according to claim 1,
wherein said second time interval is of a time length corresponding to at least 2K consecutive discrete time instances.

4. Method according to claim 1, wherein said second time interval is of a time length corresponding to at least 2K+M consecutive discrete time instances, wherein M is a predefined number.

5. Method according to claim 1,
wherein sampling values of said first and said second digital (DS1, DS2) signal are derived for successive discrete time instances at a sampling rate corresponding to a sampling period, and wherein consecutive ones of said discrete time instances are separated by said sampling period.

6. Method according to claim 1,
wherein at least one of said algorithms is a Constant Modulus Algorithm, a Multi Modulus Algorithm or a Decision Directed Approach Algorithm.

7. Method according to claim 1,
wherein the set of filter coefficients used during said second time interval is that set of filter coefficients, which was last used during said first time interval.

8. Method according to claim 1,
comprising furthermore

    - receiving data information indicating a discrete time instance at which said second time interval shall begin,
    - starting said second time interval using said data information.

9. Method according to claim 8,
wherein said data information is received via a transport frame or via control information of a control channel.

10. Method according to claim 8,
comprising furthermore,

    - setting a countdown counter to a value indicated by said data information,
    - operating said countdown counter at a sampling rate of said first and said second digital signal,
    - upon said countdown counter reaching a zero value, starting said second time interval.

11. Optical receiver for an optical network,
comprising an optical interface (OI), operable to receive a phase-modulated polarization division multiplexed (PDM) optical signal (ROS),
comprising furthermore an optical mixer (OM), at least one analogue-digital converter (ADC), and at least one processing unit (PU),
wherein said optical mixer (OM), said analogue-digital converter (ADC), and said processing unit (PU) are operable in conjunction to derive a first digital signal (DS1) and a second digital signal (DS2) from said optical signal (ROS), wherein said first digital signal (DS1) represents complex signal values of said optical signal (ROS) along a first polarization axis, and wherein said second digital signal (DS2) represents complex signal values of said optical signal (ROS) along a second, orthogonal polarization axis,

wherein said processing device (PU) is furthermore operable to perform polarization demultiplexing, by deriving from said first and said second digital signal (DS1, DS2) a third digital signal (DS3) and a fourth digital signal (DS4), using a set of finite impulse response (FIR) filters (F1, ..., F4), wherein said FIR filters (F1, ..., F4) use respective sets of K filter coefficients,

and wherein said processing device (PU) is furthermore operable to derive said third digital signal (DS3) and said fourth digital signal (DS4),

- within a first interval, by updating said sets of filter coefficients for different discrete time instances, using a first algorithm which is designed to achieve PDM demultiplexing with regard to a first phase-modulation method,
- within a second time interval, by keeping said sets of filter coefficients fixed, wherein said second time interval is of a time length corresponding to at least K consecutive discrete time instances,
- within a third time interval, by updating said sets of filter coefficients for different discrete time instances, using a second algorithm which is designed to achieve PDM demultiplexing with regard to a second phase-modulation method different from said first method.

# Fig. 1

Fig. 2

EP 2 784 962 A1

**Fig. 3**

EP 2 784 962 A1

# Fig. 4a

CS

Filter update through CMA

F2  F1

DS1

DS3

DS2

DS4

F3  F4

▨ PDM-QPSK sample

EP 2 784 962 A1

Fig. 4b

CS

Filter update
through CMA

No update    F2    F1

DS1    ?  ?    ⊕    DS3

?  ?

?  ?

DS2    ?  ?    ⊕    DS4

F3    F4

▨ PDM-QPSK sample

? PDM-QPSK sample, PDM-16QAM sample or mix of both

**Fig. 4c**

PDM-QPSK sample

? PDM-QPSK sample, PDM-16QAM sample or mix of both

PDM-16QAM sample

EP 2 784 962 A1

Fig. 4d

CS — Decision directed filter update

DS1

DS2

DS3

DS4

F1  F2  F3  F4

PDM-QPSK sample

PDM-QPSK sample, PDM-16QAM sample or mix of both

PDM-16QAM sample

# Fig. 5

EP 2 784 962 A1

Europäisches
Patentamt

European
Patent Office

Office européen
des brevets

## EUROPEAN SEARCH REPORT

Application Number

EP 13 30 5395

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/150478 A1 (WINZER PETER J [US]) 23 June 2011 (2011-06-23) * paragraph [0002] - paragraph [0004] * * paragraph [0017] * * paragraph [0034] - paragraph [0072]; figure 3 * * paragraph [0155] - paragraph [0169] * ----- | 1-11 | INV. H04J14/06 H04B10/61 |
| X | WAKAKO MAEDA ET AL: "Hardware-efficient polarization demultiplexing for QAM signals based on dual stage decision-directed algorithm", OPTICAL FIBER COMMUNICATION CONFERENCE AND EXPOSITION (OFC/NFOEC), 2012 AND THE NATIONAL FIBER OPTIC ENGINEERS CONFERENCE, IEEE, 4 March 2012 (2012-03-04), page 3, XP032340478, ISBN: 978-1-4673-0262-3 * the whole document * ----- | 1-11 | |
| A | US 2009/245816 A1 (LIU LING [CN] ET AL) 1 October 2009 (2009-10-01) * paragraph [0001] * * paragraph [0003] - paragraph [0014]; figure 1 * * paragraph [0072] - paragraph [0102]; figures 2,4,5 * ----- | 1-11 | TECHNICAL FIELDS SEARCHED (IPC) H04J H04B |
| A | WO 2010/136068 A1 (NOKIA SIEMENS NETWORKS GMBH [DE]; KUSCHNEROV MAXIM [DE]; LANKL BERTHOL) 2 December 2010 (2010-12-02) * page 1, line 8 - line 10 * * page 2, line 1 - page 4, line 28 * * page 5, line 19 - page 11, line 17; figures 1,2a,2b,3 * ----- -/-- | 1-11 | |

The present search report has been drawn up for all claims

| Place of search | Date of completion of the search | Examiner |
|---|---|---|
| The Hague | 27 August 2013 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

## EUROPEAN SEARCH REPORT

Application Number

EP 13 30 5395

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEB J SAVORY: "Digital filters for coherent optical receivers", OPTICS EXPRESS, OSA (OPTICAL SOCIETY OF AMERICA), WASHINGTON DC, (US), vol. 16, no. 2, 21 January 2008 (2008-01-21), pages 804-817, XP007906766, ISSN: 1094-4087, DOI: 10.1364/OE.16.000804 * section 2; figures 1,2,3 * * section 5 * | 1-11 | |
| A,D | SEB J. SAVORY: "Digital Coherent Optical Receivers: Algorithms and Subsystems", IEEE JOURNAL OF SELECTED TOPICS IN QUANTUM ELECTRONICS, vol. 16, no. 5, September 2010 (2010-09), XP011309090, * the whole document * | 1-11 | |
| A | ZHANG H ET AL: "Polarization demultiplexing based on independent component analysis in optical coherent receivers", OPTICAL COMMUNICATION, 2008. ECOC 2008. 34TH EUROPEAN CONFERENCE ON, IEEE, PISCATAWAY, NJ, USA, 21 September 2008 (2008-09-21), pages 1-2, XP031380905, ISBN: 978-1-4244-2227-2 * the whole document * | 1-11 | TECHNICAL FIELDS SEARCHED (IPC) |

The present search report has been drawn up for all claims

| Place of search | Date of completion of the search | Examiner |
|---|---|---|
| The Hague | 27 August 2013 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 30 5395

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2013

| Patent document cited in search report | | Publication date | Patent family member(s) | | Publication date |
|---|---|---|---|---|---|
| US 2011150478 | A1 | 23-06-2011 | NONE | | |
| US 2009245816 | A1 | 01-10-2009 | CN | 101552640 A | 07-10-2009 |
| | | | JP | 5223700 B2 | 26-06-2013 |
| | | | JP | 2009253972 A | 29-10-2009 |
| | | | US | 2009245816 A1 | 01-10-2009 |
| WO 2010136068 | A1 | 02-12-2010 | CN | 102461035 A | 16-05-2012 |
| | | | EP | 2436132 A1 | 04-04-2012 |
| | | | US | 2012084619 A1 | 05-04-2012 |
| | | | WO | 2010136068 A1 | 02-12-2010 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SEB J. SAVORY.** Digital Coherent Optical Receivers: Algorithms and Subsystems. *IEEE Journal of Selected Topics in Quantum Electronics,* September 2010, vol. 16 (5